# EUROPEAN PATENT SPECIFICATION

(11) **EP 4 491 345 B1**
(45) Date of publication and mention of the grant of the patent: **15.10.2025**
(21) Application number: 23382711.2
(22) Date of filing: 12.07.2023
(51) Int. Cl.: B25J 9/00, B66F 7/20, H02G 1/02, B66C 5/02

(54) **SIX-DEGREE-OF-FREEDOM PARALLEL ROBOT FOR TASKS AT HEIGHTS AND HIGH VOLTAGE**
PARALLELROBOTER MIT SECHS FREIHEITSGRADEN FÜR AUFGABEN IN HÖHEN UND UNTER HOCHSPANNUNG
ROBOT PARALLÈLE À SIX DEGRÉS DE LIBERTÉ POUR LES TÂCHES EN HAUTEUR ET À HAUTE TENSION

(43) Date of publication of application: 15.01.2025
(73) Proprietor: I-De Redes Eléctricas Inteligentes, S.A.U, 48003 Bilbao Vizcaya (ES)
(72) Inventor: Varela Sanz, Jesús, Madrid (ES)
(74) Representative: Pons IP

(56) References cited:
- EP-B1- 0 940 366
- CN-A- 102 601 782
- US-A1- 2022 017 337
- US-A1- 2022 239 076
- US-A1- 2023 125 602
- TIE SHI ZHAO ET AL: "A Novel Four-DOF Parallel Manipulator Mechanism and Its Kinematics", 2006 IEEE CONFERENCE ON ROBOTICS, AUTOMATION AND MECHATRONICS, 4 December 2006 (2006-12-04), pages 1 - 5, XP093103025, ISSN: 2158-2181, ISBN: 978-1-4244-0024-9, Retrieved from the Internet <URL:https://ieeexplore.ieee.org/stampPDF/getPDF.jsp?tp=&arnumber=4018788&ref=> [retrieved on 20231116], DOI: 10.1109/RAMECH.2006.252672

## Description

### OBJECT OF THE INVENTION

The present invention relates to a six-degree-of-freedom robotic device for performing tasks of different types on power lines, electrical towers and other elements of the electrical grid, both in the presence or absence of voltage.

### BACKGROUND OF THE INVENTION

Patent documents US2022239076A1 and US2022017337A1 disclose various examples of robotic devices and stabilisation structures for performing tasks on power lines

When installing certain items on an overhead power line, two options are often considered: either interrupting electrical service, which can affect customers, or working with active electrical service, which presents risks to workers. This is the case, for example, when installing unit for *Dynamic Line Rating* (DLR), which includes several elements, requiring one of them to be attached directly on the driver.

Generally, when work is to be done on the cable, a request is made in advance to remove the voltage from the line, and, if this is possible, the request is granted. Typically, the process of requesting and granting the shutdown of the line lasts several weeks. When the previously agreed date arrives, the electrical service is cut off and security measures are implemented, for example, the grounding of the lines to prevent induced currents from affecting the workers. The circuit is left visibly open, the absence of voltage is verified, the area is marked, and then work begins.

The task itself, even without voltage, still presents certain risks, requiring workers to climb up power towers and work at heights for hours handling heavy objects, which can cause a loss of balance or be dropped. Although the worker is unlikely to fall due to the fact that a harness must be worn, they could injure themselves in an awkward manoeuvre, injure someone passing below paying little attention, or could fall after the cable or basket they are working on being broken.

The method as a whole generates chain delays that prevent an efficient mass installation of unit. Due to the conditions inherent to the exploitation of the grid, it is not possible to schedule many simultaneous or consecutive discharges. Its management requires considerable time and the work takes time and also guaranteeing the safety of all.

For all of the above, from the point of view of efficiency it would be desirable to work on an energised line, but for safety, it is desirable to delegate the task with the highest risk (due to height and contact with electricity) to a robot-tool, avoiding dangers to operators and third parties.

### DESCRIPTION OF THE INVENTION

The object of the present invention is a six-degree-of-freedom robotic device as defined in the appended claim 1 for performing tasks of different types on power lines, electrical towers and other elements of the electrical grid, both in the presence or absence of voltage. The device prevents a person from having to perform height, live-line, near live-line work, or all at the same time. It is also applicable to other tasks, such as construction and assembly, for example.

The invention has use in a wide variety of electrical works that have to be performed in the presence of high voltage or not. For example, placing the ground connections, installing sensors in the cables, installing insulators in the power tower, and many other tasks. All that is required to carry out each task is to place an appropriate tool on the device.

The invention comprises a steerable tower, which in turn comprises at least one 3D positioning module and three or more three-degree-of-freedom stabilisation pillars. Together, these components enable a tool that is required for performing work at height to be stably and accurately fastened and moved. The variable length of the pillars allows the tool to be lifted to the work area and the 3D positioning module allows it to be placed in the position that is needed, with the orientation required.

Several of the pillars essentially function as prismatic actuators that lift the tool to the actuation point while the rest are part of the 3D positioning module. The connection between each stabilisation pillar and the ground or a foundation allows two DOFs, allowing the tower to move in all three coordinate axes (three degrees of freedom). By adjusting the length of the pillars, it is possible to orient the tool, providing another two additional degrees of freedom. In addition, the device can include an optional upper platform, which would provide an anchoring point for the next elements.

If the device has four pillars, it is easier to orient the tool adapting to the requirements of the workplace, since the power line will have a different height and inclination depending on the chosen work point, in addition to suffering position variations due to possible movements caused by the wind. The device can comprise three, four, or more than four, although four pillars are the preferred option.

The positioning of the tool is achieved by means of the 3D positioning module, and the orientation of the tool on the cable is mainly achieved by adjusting the length of the prismatic actuators of the pillars.

Preferably, the stabilisation pillars are not circular in transversal cross section to avoid undesired rotations, for example, they can be polygonal in section, such as polygonal or oval transversal.

The 3D positioning module comprises at least two positioning actuators connected to a base by means of three two-degree-of-freedom joints and to one of the pillars, forming a triangle at the base and a tetrahedron as a whole. The upper end of the positioning actuators must be joined to the first segment of the main pillar.

Positioning actuators can be prismatic, belt-driven or geared rotary, worm-type, or any of the usual types of actuator. The appropriate choice of the actuator allows to improve the accuracy or the speed of response and it is desirable to have the highest accuracy possible, since the movements required will normally be slow, but they must be accurate.

In addition, it must be taken into account that the pillars have a multiplying effect on the amplitude of the movement at their upper end, which increases the longer they are.

Using two 3D positioning modules, located on alternate pillars of the steerable tower, better positioning accuracy is achieved, since they reduce clearances and the effect of external forces between both of them. This allows the upper platform to be placed under the driver as appropriate in each case.

As mentioned, the pillars can be placed on a base, which is essentially a rectangle that is adjustable in length and width, made up of several components. The stabilisation pillars will rest thereupon. This base is extensible to be able to gain stability, when required, and to be able to adapt to the ground where it is installed, which could be irregular. To do this, it has lateral components with a 90° angle and straight central components that allow the width of the base to be adjusted to the desired length, using pins that are inserted through the holes in the components. The central component can be removable, to facilitate transport and the set of lateral components can be collected on its pair of pillars to reduce the space occupied. If it is to be further disassembled, it just requires removing the connecting pins between the pillar and the base.

The base can also include height-adjustable removable legs, which allow the base to be lifted above the ground and fixed thereto. When the device works, it is desirable that the support on the ground is as firm as possible. In addition, these supports allow the relative height of each support to be adjusted so that the base remains horizontal, when the terrain is uneven in height. Most of the solutions are installed on a truck that must be placed on more or less horizontal ground, otherwise it could not be used, while the present invention can be placed on any ground, thanks to the removable legs.

Optionally, the base can have extensible lateral stabilisation supports to gain support width, like those found on crane trucks.

The support point of the positioning actuator should be anchored to the same lateral segment on which the pillar on which it acts is placed. In this way, when changing the width of the base, the distance from this point to the support of the pillar is not altered and it is not necessary to adapt the length of the actuator, nor to adjust the control module.

The difficulty with reaching extreme positions is that they are off the base and bring the device into an unstable position. For this to be possible, the base must be heavy and the pillars lightweight, which is feasible, since same do not need to support much weight. It is also possible to place a counterweight, or place extensible lateral supports, with removable legs in the descent area of the device, expanding its base in that direction and consequently its area of stability. In any case, to lower the platform very close to the ground, a pair of pillars would be retracted to the maximum, reducing the torque supported by the positioning actuators. This makes manoeuvring easier and reduces the need for additional security measures.

The base comprises two-degree-of-freedom anchoring points made up of a fixed portion and a movable portion that has a hole, prepared so that the lower ends of the pillars can be attached thereto. These ends may or may not have an internal bearing to facilitate the mobility of the pillar on its support if required. The anchoring points can be twofold or threefold to reduce play in the joints and improve the accuracy of the steerable tower. This solution is also used to anchor the pillars to the upper platform, so that the joint offers two degrees of freedom.

On the pillars or the upper platform, if it exists, an insulation module must be placed and on this a voltage distribution platform of the line on which the appropriate tool for the task to be performed will be attached. In general, an isolation module must be installed between the pillars and the distribution platform that separates the power line voltage from the rest of the device that is supported on the ground. In the case of live-line works, this element is essential. For performing work with the line in discharge it could be suppressed, but it is convenient to keep it for safety, to avoid the passage of induced currents from the line to the lower portion of the device, in the vicinity of which there could be people.

As for the four-support isolation module, many solutions can be used, as long as they guarantee reliable isolation between the line voltage (low, medium or high) and the ground. It is proposed herein to use four standard insulators from a manufacturer, sized with an appropriate insulation capacity for the lines in which work is going to be carried out, and arranged in a configuration similar to a four-legged table that allows guaranteeing the stability of the tool and the required isolation distances.

To be able to work at various voltage levels, it is possible to choose to place insulators with high insulation capacity or to make the insulation module standardised and interchangeable, so that, to use the robot at another voltage level, it is enough to replace this component by another one having the appropriate isolation level. To this end, the upper portion of the insulation module has been provided with guides in which the lower portion of the voltage distribution platform could be fitted, so that it is easily interchangeable. It also has some bolts that prevent the involuntary movement of the platform with respect to the isolation module. This can be attached to the upper platform of the deployable tower using screws or bolts.

The voltage distribution platform is placed on the insulation module. Its main function is to take the voltage from the line and distribute it to all the metallic elements of the tool and objects that could come into contact with the line or pass very close thereto, to avoid unwanted currents or electric arcs. The platform, on which the tool is placed, can further comprise a movable camera and a clamp for connecting to the line, preferably mounted on movable arms.

The coupling module between the platform and the tool must be simple and safe. It can be done by fixing three or four screw points, or by using guides in the platform where the tool is inserted, and then securing same with a bolt that is inserted into a hole when the tool reaches its correct position. To remove the tool, pressure is exerted on the bolts to release same and allow it to slide down the guides for removal thereof.

The device can also comprise a platform control module, which is responsible for controlling the interchangeable tool. On the contact surface between the voltage distribution platform and the tool, there are push elements that allow the push buttons of the main controls of the tool to be actuated by pressure, but without establishing electrical contacts. This design takes into account the location of the push buttons in that area, so that the platform control can handle the tool without electrical contact between the two.

The platform comprises a base for attaching to the insulation module and an upper platform for placing the tool. These parts are connected by a wide cylindrical trunk that houses the platform control module. In addition, it has two controllable rotating arms that allow the camera and the electrical connection clamp to be positioned in different positions. It is also possible to add a hinge on the rotating arms to adjust the orientation of the camera as required.

The cylindrical trunk is the perfect place to include the sixth degree of freedom, which allows rotation orientation according to the Z axis of the tower. This can be useful in specific cases or with certain applications or tools. An actuator would be in charge of moving the upper platform in relation to the cylindrical trunk.

The tool will move close to the line and come into contact with same. Since it is electrically isolated from the steerable tower, which is the part of the robot in contact with the ground, it is unlikely that the tool or the items it carries suffer any damage. However, depending on the voltage level, it may be necessary to have a line voltage distribution module that allows equalising the voltage level of the metallic elements that the robot handles. This electrical connection must be flexible so as not to hinder the movement of the device, but it must not leave the cable too loose to avoid accidental contact with the electrical tower, other lines, or the steerable tower.

Therefore, the device can additionally comprise a clamp that will be connected to the line before starting work, when required. Once the clamp is attached to the line, the rigid anchor between the clamp and the movable arm must be released without losing electrical contact, which will be maintained by means of a flexible cable attached to the metallic elements of the platform and the tool. The cable must have a self-retracting module by means of a spring that does not exert too much force, but that only maintains the required length at all times. In this way, unwanted contacts are avoided. In addition, since the path of the cable is very close to a straight line between the clamp and the movable arm, the control module can calculate its position at all times and ensure that there are no accidental contacts.

The usual way to attach a clamp to the line is by means of the pressure exerted by a screw, which ensures good contact. The clamp comprises a clamp base with a fixed blade and another movable blade that can be actuated by means of a spring, in order to force a safe and rapid closure, ensuring good electrical contact between the line and the clamp. The part of the clamp described so far is made of electrically conductive material. In addition, there is a nonconductive mount that holds the base of the clamp and allows the clamp assembly to be handled. There is a push button on the base of the clamp that facilitates closing. When the open clamp approaches the driver and same presses lightly on the push button, this triggers the spring that forcefully closes the clamp and ensures electrical contact.

Once the work is finished, the clamp must be opened to disconnect same from the line and be able to remove the device. It is not convenient that the clamp can be opened simply by pulling same, because for this a spring with little force would have to be used and there is a risk that the clamp would come loose from the driver during work, in some movement. The clamp must be gripped firmly and therefore considerable force must also be exerted to release same. There are several alternatives: an actuator, another tool on the voltage distribution platform, or a mechanism associated with the clamp arm itself.

For simplicity and safety, the best solution is a mechanical system, not an electrical one. Thus, the arm has a sliding stem that ends in the shape of a funnel with a fine projection in the centre. In this way, when the arm approaches the mount of the clamp, the funnel will facilitate the correct coupling of the two portions. Once they are joined, the thin projection will tap inside the mount, causing the movable portion to be released from the base of the clamp. When the movable part of the base of the clamp is released, the spring stops exerting pressure and the clamp is loosened. To use the clamp again, same must be reassembled, but this will happen on the ground, after the work is finished, so the operation will be safe.

The alternative of using a motor with a gearbox to tighten and release the grip of the clamp would imply permanent energy consumption and dependence on a battery that, when depleted or deteriorated, would jeopardise the tightening of the electrical connection. If used only to release the clamp, it must be sized for exerting sufficient pressure to retract the spring and leave it charged for its next shot, and in any case involves isolating an actuator and battery.

In any case, the movable blade has been designed such that, in the event of a failure of the clamp release mechanism, it provides a firm support point on which to safely exert pressure to release the clamp manually or with another tool.

For its part, the camera allows the device to perform its movement independently and automatically, or also allows an operator to inspect or guide the work performed by the device from the ground. If the camera is located on a mobile, articulated arm that comes out of the tool-holding platform itself, its motility allows it to observe the action from different work points, avoiding the tool, the clamp and the line, or observing same.

Another option is to place the clamp in fixed positions and design the tools so that they do not obstruct the vision, or give them limited mobility by fixing them to a rigid segment, or giving them a predefined path. It is also feasible to integrate them into the tools, giving them specific and privileged locations for that which requires observation.

In addition, the device may comprise a control module, which is responsible for the behaviour of the robot, if its movement is not manually performed. The control module is responsible for performing the required movements to take the tool to the place of use and of using same for performing the scheduled task.

When the device is at rest, the stabilisation pillars are retracted to take up less space, but during operation they extend close to the line. The length of each pillar can be individually adjusted for steering the upper platform in a flexible manner. Positioning actuators move the pillars closer to a line or to the other side, allowing the tool to be positioned below or to the side as required. However, each movement of the positioning actuators influences the lengths of the four pillars that are required to maintain the desired position and steering of the tool, since it modifies the inclination of the pillars.

The control of the length of each pillar and of the positioning actuators is the responsibility of the control module of the device. This module uses the knowledge of the kinematic and dynamic structure of the set to establish the setpoints for each controllable element.

For example, in a manoeuvre to approach the cable, open the unit and place the cable inside same for its subsequent closure around the driver, the path that the robot must follow is complex and requires accuracy. A time-coordinated movement of all actuators is needed simultaneously. The control module is responsible for this task using the direct and inverse kinematics of the robot for position control, and using the Jacobian to control the speed of the different actuators at all times. In this way, the tool is always kept in the correct position and orientation, and moves away from other elements in the environment to avoid collisions or electrical arcs due to proximity to other lines or the electrical tower.

The control module, in addition to moving the device in general, is capable of controlling the tool that it handles. There are many ways to carry out this coordination preserving the isolation between the two areas of the device (the steerable tower that is ground connected and the voltage distribution system that is or may be live).

The first option is to establish wireless communication between the tool control module and the device control module. A second possible solution would be to schedule a behaviour in the tool, based on actuation times, in other words, assign a reasonable time to the first manoeuvre, another to the second, another to the third and make the robot coordinate its movements with the due task of the tool at each instant, monitoring correct time compliance through the camera.

The method is simple, but carries some risk, especially when performing live work, because if a task becomes complicated and the tool performs a task at the wrong time, unwanted electrical contact or improper pressure at an improper point on the cable could occur. To mitigate this, the voltage distribution platform comprises at least one element capable of pressing a push button to stop the tool.

Classic displacement solutions involve mounting the device on a vehicle or on a crane basket, among others. Alternatively, wheels could be fitted to the base of the device, which could be motorised using pull actuators concealed within the structure. These would be controlled by the control module.

The device may be fully autonomous and capable of performing tasks without human assistance. However, a mixed embodiment can be also selected, where some tasks are performed autonomously and others are controlled by a person.

In order to provide instructions to the device, the device may comprise a remote control module that allows instructions to be given without physical contact. This module can be used for activating the robot and performing tasks autonomously or for performing specific actions such as stop, move, etc.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows a preferred embodiment of the six-degree-of-freedom robotic device.
Figure 2 shows a detailed view of the 3D positioning module connected to the extensible base and to one of the pillars.
Figure 3 shows a detailed view of a voltage distribution platform with two controllable arms, the first having a camera and the second having a clamp mounted. In addition, a DLR unit installation tool and a DLR unit can be seen.

### PREFERRED EMBODIMENT OF THE INVENTION

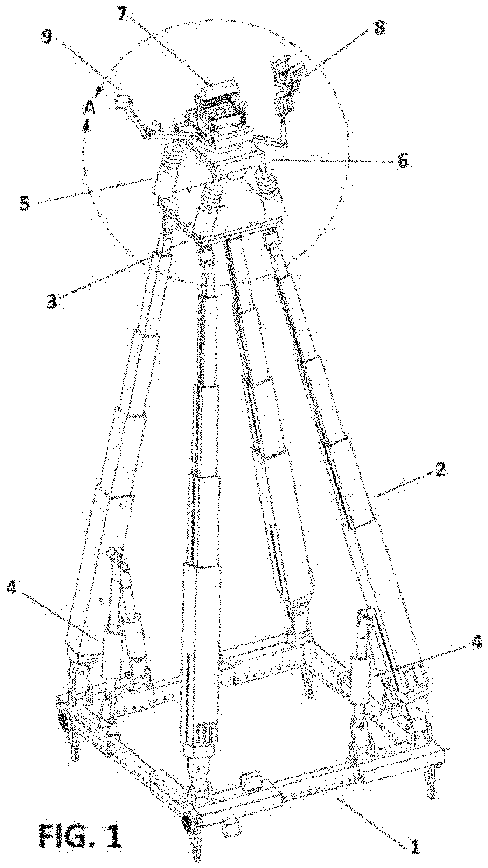

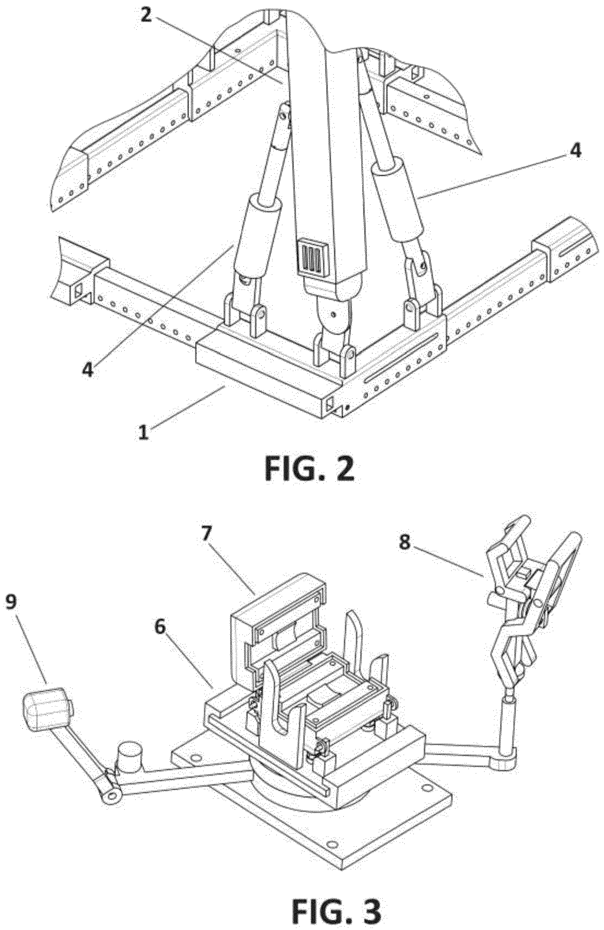

Described below, with the help of figures 1 to 3, is a preferred embodiment of the six-degree-of-freedom robotic device for performing tasks of different types on power lines, electrical towers and other elements of the electrical grid, both in the presence or absence of voltage, object of the present invention.

As can be seen in Figure 1, the robot has two 3D positioning modules (4), an expandable base (1), four expandable stabilisation pillars (2), an upper platform (3), an electrical isolation module (5) with four supports, a voltage distribution platform (6) with two controllable movable arms, a tool, a clamp (8) mounted on one of the movable arms, and a camera (9) mounted on the other movable arm.

The pillars (2) have a square cross section. A cylindrical element, which is part of the voltage distribution platform (6), implements the inclusion of the sixth degree of freedom, the rotation about the Z axis.

In this case, a tool designed for mounting a DLR (*Dynamic Line Rating*) unit (7), but it is possible to place all kinds of tools on the voltage distribution platform (6).

The tool is a platform on which several elements are arranged: four fixed supports to which the DLR unit (7) will be anchored, two movable pistons for opening and closing the upper cover of the DLR unit (7) and four automatic screwdrivers that open and close the DLR unit (7). The tool is designed such that it couples to the attachment mechanisms of the voltage distribution platform (6).

To carry out the assembly work of a DLR (7) on a power line, first of all, the DLR (7) must be placed on the tool, and same on the voltage distribution platform (6) and attach it properly so that when the robot moves, takes the unit therewith. For attaching the DLR (7) to the tool, the screws are placed on the automatic screwdrivers of the tool and the DLR (7) is attached on the fixed supports, taking advantage of the bolts available to insert over the holes that the DLR (7) has for fastening thereof.

The steerable tower will lengthen the stabilisation pillars (2) to bring the unit to the job site. Then, to mount the DLR (7) on the cable, the following steps must be performed:
- Opening the DLR (7) unit, so that the cable can be placed inside the open DLR (7). To do this, the movable pistons will slide downwards, lifting the upper cover of the DLR unit (7) which is held by the fixed anchors.
- Placing the cable inside the DLR unit (7), for which the device must move with the DLR (7) open, until the cable is housed inside. It will move to one side (preferably to the side where there are no other lines nearby), it will be lifted and moved again in the opposite direction to the initial one, until placing the cable in the slot that the DLR (7) has inside.
- Closing the DLR unit (7) trapping the cable in the correct place. For this, several operations of greater or lesser accuracy are required. Therefore:
   o The position of the driver with respect to the central press is adjusted, repositioning and orienting with accurate movements of the device, specifically of the 3D positioning modules (4) and the stabilisation pillars (2). The camera (9) makes it possible to ensure a correct adjustment. The lateral guides help put the cable in place, as they are prepared so that the cable easily goes into place. It is U-shaped with one side higher than the other, to facilitate the entry of the cable and prevent it from going beyond its appropriate place. In addition, the rounded shape at the entrance facilitates insertion at the beginning and accurate positioning at the end of the manoeuvre, as the path of the cable gradually narrows.
   ∘ The DLR unit (7) is closed around the cable, lifting the movable pistons and trying to prevent the cable from moving during the operation.
   ∘ The lateral closing screws are tightened using the lateral screwdrivers. The process stops when some resistance to turning the nut is encountered.

Then, in order to remove the tool, leaving the unit on the cable, the following sequence of operations must be performed:
- Trying to open the unit using the sliding pistons. If everything has gone well, resistance will be encountered and opening same will not be possible.
- Releasing the grip of the unit by sliding the bolts that are in the movable anchors.
- Releasing the grip of the unit by sliding the bolts that are in the fixed anchors.
- Moving the tool down away from the DLR (7), controlling the positioning actuators and stabilisation pillars (2) to manoeuvre the tool out without dragging the line.

Finally, to pick up the device, the voltage distribution platform is disconnected from the line. To do this, the following steps must be followed:
- Lifting the arm corresponding to the clamp (8).
- Moving the voltage distribution platform (6) to insert the clamp support (8) into the funnel.
- Pressing lightly to release the clip (8).
- Retracting the stabilisation pillars (2) to lower the tool.

## Claims

1. A six-degree-of-freedom parallel robotic device for performing tasks of different types on power lines, electrical towers, and other elements of the electrical grid, in the presence or absence of voltage, which comprises:
-
- at least one 3D positioning module (4) connected to at least one of the pillars (2),
- an electrical isolation module (5) installed on the pillars (2), to isolate the voltage from the electrical grid, and
- a voltage distribution platform (6) attached to the electrical isolation module (5), intended to be connected to a power line,
**characterised by** comprising four three-degree-of-freedom extensible stabilisation pillars (2) intended to be placed on a surface, forming a tower able to be steered in space.

2. The device of claim 1, further comprising an operating tool placed on the voltage distribution platform (6) and a control module thereof.

3. The device of claim 1, further comprising an operations control camera (9).

4. The device of claim 1, wherein the pillars (2) have a non-circular cross-section, selected between polygonal and oval transversal.

5. The device of claim 1, comprising two 3D positioning modules on alternated pillars (2).

6. The device of claim 1, wherein the voltage distribution platform (6) further comprises a rotation element about the Z axis.

7. The device of claim 1, further comprising an extensible base (1), on which the pillars (2) are arranged.

8. The device of claim 7, wherein the extensible base (1) additionally comprises adjustable and removable legs that allow lifting and securing the position of the extensible base (1) on a surface.

9. The device of claim 1, which additionally comprises a control module, connected to the 3D positioning modules (4) and the pillars (2), for the automatic management thereof.

10. The device of claim 1, further comprising a clamp (8) for connecting to the power line, associated with the voltage distribution platform (6).

11. The device of claim 3 or 10, further comprising one or more controllable movable arms, mounted on the voltage distribution platform (6), the clamp (8) and/or the camera (9) being attached to the arms.

## Patentansprüche

1. Parallelrobotervorrichtung mit sechs Freiheitsgraden zum Durchführen von Aufgaben unterschiedlicher Art an Stromleitungen, Strommasten und anderen Elementen des Stromnetzes bei vorhandener oder fehlender Spannung, die umfasst:
- mindestens ein 3D-Positionierungsmodul (4), das mit mindestens einer der Säulen (2) verbunden ist,
- ein elektrisches Isoliermodul (5), das an den Säulen (2) installiert ist, um die Spannung vom Stromnetz zu trennen, und
- eine Spannungsverteilungsplattform (6), die an dem elektrischen Isolationsmodul (5) angebracht ist und an eine Stromleitung angeschlossen werden soll,
**dadurch gekennzeichnet, dass** sie vier ausfahrbare Stabilisierungssäulen (2) mit drei Freiheitsgraden umfasst, die dazu vorgesehen sind, auf einer Oberfläche platziert zu werden, wodurch ein Turm gebildet wird, der in der Lage ist, im Raum gesteuert zu werden.

2. Vorrichtung nach Anspruch 1, die ferner ein auf der Spannungsverteilungsplattform (6) angeordnetes Bedienwerkzeug und ein Steuermodul davon umfasst.

3. Vorrichtung nach Anspruch 1, die ferner eine Arbeitskontrollkamera (9) umfasst.

4. Vorrichtung nach Anspruch 1, wobei die Säulen (2) einen nicht kreisförmigen Querschnitt aufweisen, der zwischen polygonal und oval transversal ausgewählt ist.

5. Vorrichtung nach Anspruch 1, die zwei 3D-Positionierungsmodule an abwechselnden Säulen (2) umfasst.

6. Vorrichtung nach Anspruch 1, wobei die Spannungsverteilungsplattform (6) ferner ein Rotationselement um die Z-Achse umfasst.

7. Vorrichtung nach Anspruch 1, die ferner ein ausziehbares Unterteil (1) umfasst, auf dem die Säulen (2) angeordnet sind.

8. Vorrichtung nach Anspruch 7, wobei das ausziehbare Unterteil (1) zusätzlich verstellbare und abnehmbare Beine umfasst, die das Anheben und Sichern der Position des ausziehbaren Unterteils (1) auf einer Oberfläche ermöglichen.

9. Vorrichtung nach Anspruch 1, die zusätzlich ein Steuermodul umfasst, das mit den 3D-Positionierungsmodulen (4) und den Säulen (2) verbunden ist, um diese automatisch zu steuern.

10. Vorrichtung nach Anspruch 1, die ferner eine Klemme (8) zum Verbinden mit der Stromleitung umfasst, die der Spannungsverteilungsplattform (6) zugehörig ist.

11. Vorrichtung nach Anspruch 3 oder 10, die ferner einen oder mehrere steuerbare bewegliche Arme umfasst, die an der Spannungsverteilungsplattform (6) montiert sind, wobei die Klemme (8) und/oder die Kamera (9) an den Armen angebracht sind.

## Revendications

1. Dispositif robotique parallèle à six degrés de liberté pour réaliser des tâches de différents types sur les lignes de puissance, des tours électriques et d'autres éléments du réseau électrique, en présence ou en l'absence de tension, qui comprend :
- au moins un module de positionnement 3D (4) relié à au moins un des piliers (2),
- un module d'isolation électrique (5) installé sur les piliers (2), pour isoler la tension du réseau électrique, et
- une plate-forme de distribution de tension (6) fixée au module d'isolation électrique (5), destinée à être reliée à une ligne de puissance,
**caractérisé en ce qu'**il comprend quatre piliers de stabilisation extensibles à trois degrés de liberté (2) destinés à être placés sur une surface, formant une tour apte à être dirigée dans l'espace.

2. Dispositif selon la revendication 1, comprenant en outre un outil d'opération placé sur la plate-forme de distribution de la tension (6) et un module de commande de celui-ci.

3. Dispositif selon la revendication 1, comprenant en outre une caméra de commande des opérations (9).

4. Dispositif selon la revendication 1, dans lequel les piliers (2) ont une section transversale non circulaire, choisie entre polygonale et ovale transversale.

5. Dispositif selon la revendication 1, comprenant deux modules de positionnement 3D sur des piliers (2) alternés.

6. Dispositif selon la revendication 1, dans lequel la plate-forme de distribution de tension (6) comprend en outre un élément de rotation autour de l'axe Z.

7. Dispositif selon la revendication 1, comprenant en outre une base extensible (1), sur laquelle les piliers (2) sont agencés.

8. Dispositif selon la revendication 7, dans lequel la base extensible (1) comprend de plus des pieds réglables et amovibles qui permettent de soulever et d'assurer la position de la base extensible (1) sur une surface.

9. Dispositif selon la revendication 1, qui comprend de plus un module de commande, relié aux modules de positionnement 3D (4) et aux piliers (2), pour la gestion automatique de ceux-ci.

10. Dispositif selon la revendication 1, comprenant en outre une pince (8) pour la liaison à la ligne de puissance, associée à la plate-forme de distribution de tension (6).

11. Dispositif selon la revendication 3 ou 10, comprenant en outre un ou plusieurs bras mobiles pouvant être commandés, montés sur la plate-forme de distribution de tension (6), la pince (8) et/ou la caméra (9) étant fixée(s) aux bras.
